Europäisches Patentamt

European Patent Office

Office européen des brevets

(11) Publication number: **0 165 992**

**B1**

# EUROPEAN PATENT SPECIFICATION

(45) Date of publication of patent specification: **29.11.89**

(51) Int. Cl.⁴: **B 01 D 13/00**

(21) Application number: **85900547.2**

(22) Date of filing: **20.12.84**

(86) International application number:
**PCT/US84/02094**

(87) International publication number:
**WO 85/02783 04.07.85 Gazette 85/15**

(60) **Divisional application 88101769 filed on 08.02.88.**

(54) FILTRATION METHOD AND APPARATUS.

(30) Priority: **20.12.83 US 563319**

(43) Date of publication of application:
**02.01.86 Bulletin 86/01**

(45) Publication of the grant of the patent:
**29.11.89 Bulletin 89/48**

(84) Designated Contracting States:
**CH DE FR GB LI SE**

(56) References cited:
EP-A-0 112 152    US-A-2 678 133
DE-A-2 251 644    US-A-3 333 828
DE-A-2 812 042    US-A-3 491 021
GB-A-1 480 406    US-A-3 504 801
GB-A-2 080 144    US-A-3 771 899
US-A-2 474 007    US-A-3 821 108
US-A-2 670 849    US-A-4 043 919
DESALINATION, vol. 35, 1980, pages 115-128,
Elsevier Scientific Publishing Company,
Amsterdam, NL; M. LOPEZ-
LEIVA:"Ultrafiltration at low degrees of
concentration polarization: technical
possibilities"

(73) Proprietor: **Membrex, Inc.**
**c/o Leonard Hodgins 1325 Adams Street**
**Hoboken, New Yersey 07030 (US)**

(72) Inventor: **SCHMIDT, Iosif**
**2270 85th Street**
**Brooklyn, NY 11214 (US)**
Inventor: **BADIALI, Mario**
**3515 Henry Hudson Parkway**
**Bronx, NY 10463 (US)**

(74) Representative: **Townsend, Derek Thomas et al**
**Spence & Townsend Mill House Wandle Road**
**Beddington**
**Croydon Surrey CR0 4SD (GB)**

# EP 0 165 992 B1

**Description**

The present invention in its most general aspect relates to filtration methods and apparatus for same. In its preferred form, it relates to filtration methods employing semi-permeable membranes as the filtration media. Such methods include reverse osmosis, ultrafiltration, dialysis, electro-dialysis, water-splitting, pervaporation and microfiltration, and depend on certain components being much more permeable through the membrane than other components. The result of such filtration methods is to separate one or more substances by retaining some within a retentate while others are separated into a permeate. In the case of electrodialysis, certain ions are much more permeable through the membrane than other solution components. The valuable fraction may be either the concentrate, the permeate or, in some instances, both, depending on the particular application. In the microfiltration of beer and the desalination of brines, the permeate is the desired product. In the preparation of pharmaceutical intermediates wherein bacterial growth is carried out in an inert but acceptable medium, the concentrate is the valuable fraction.

In its most specific aspect, the present invention is directed at overcoming the ubiquitous problem of clogging or blinding of the filter media by the accumulation of dissolved or suspended material thereon.

In conventional separations with a stationary membrane the first condition is that the liquid mixture pass over a large area of filter media in a short time. The reason for this is apparent; total flux through the membrane is proportional to its area, and separation will occur only at the liqudi-media boundary, often called the boundary layer. This boundary layer tends to retain rejected solute species, which are retarded from returning to the bulk solution. This leads to concentration polarization and in some cases to formation of gel layers.

Of course, what has made more fine separations possible is the development of sophisticated filter materials, known generally as semi-permeable membranes. In microfiltration, for example, micro-sized pore filters can filter out the bacteria that would otherwise spoil unrefrigerated beer, replacing pasteurization and making available storage-stable "real draught" beer in markets. In reverse osmosis filtration, brines and other polluted solutions can be rendered potable (usually after several treatments *in seriatim*) provided the system pressure on the filter medium exceeds the osmotic pressure. Specifically, tailored plastic and cellulosic materials form the filter media in such cases. In electro-dialysis filtration, similar media are used, but an electric charge—creating an effective cathode and anode—help propel the separation. Also, therapeutic dialysis is used to purify patient's blood. However, present systems are very expensive and are of limited availability.

As noted above, the clogging or blinding of filter media is a problem at any level of filtration, insofar as trans-membrane flow (flux) drops as the pores in the filter media become clogged. While scraping off a filter cake and backwashing the canvas will suffice in flotation separations, the problems multiply when one deals with finer separations. Gels (highly hydrated molecules also called flocs) can form. As solute concentration builds up at the boundary layer, chemical precipitation of colloidal-size particles can occur, a typical case being the precipitation of gypsum (hydrated calcium sulfate) from sea water. Blinding and clogging problems are compounded by the fact that semi-permeable membranes are not amenable to the rough treatment accorded drum filters in ore-dressing plants. How prior workers have addressed this problem is set forth below.

Huntington, in U.S. Pat. No: 3,355,382, discloses a reverse osmosis desalination system that roates at over 1,000 r.p.m. providing G forces of 400, 300 and 200 on three concentric membranes. The outer shell and membranes rotate as a unit. The device does not fly apart from centrifugal rupture because of hydraulic pressure on the membranes, around 1,000—2,000 p.s.i.a. (6895—1379 KPa). The membranes are periodically cleaned by suddenly closing a valve in the outlet line to momentarily raise the back pressure above the brine pressure, creating a "water hammer". In U.S. Pat. No: 3,396,103 of the same inventor, the cylindrical membranes are replaced by planar segments, and the resulting variation of centripetal acceleration across the segment surfaces is said to force transverse lateral circulation of brine, and lower boundary layer solute concentration.

The reverse approach is taken by Grenci in U.S. Pat. No: 3,400,074. Here, the brine is fed to the interior of the drum and the acceleration achieved by rotation is used to drive the fluid against the peripheral membrane and thus overcome the osmotic pressure. The membrane and drum rotate as a unit. This patent does not really address either the problem of membrane blinding or the structural integrity of the membrane, though in the latter instance it mentions that inlet and outlet pressures are low, but that pressure on the membrane can range from 10 to 10,000 p.s.i. (68.95 to 68950 KPa).

The U.S. Patents to Manjikian, Nos: 3,821,108, 3,830,372 and 3,849,305, disclose long, narrow-diameter cylindrical membrane units eccentrically mounted in a fixed cylinder along with mechanical stirrers, rotation of the stirrers being relied on to maintain a turbulent condition that will keep the membranes free of occluded matter. The cylindrical membrane units are displaced in a circular path about the axis of the fixed cylinder.

The British patents of Keefer, Nos: 1,603,746 and 1,603,747, disclose a first rotor which imparts an angular velocity to the feed and a second rotor, including a diffuser and the membrane, which operates at a distinct, lower speed. By encouraging free convection of the feed, concentration polarization and filter clogging is reduced.

Johnson U.S. Patent 3,647,632 concerns an apparatus for culturing cells. Cells and a growth medium

2

are placed in a rotary filter device in which the rotating filter surface rejects the cells. The filtrate may be withdrawn by pressure differential, and a magnetic stirring device may be used to cause rotation.

Johnson fails to disclose or suggest producing a testable fluid or a test signal free from the effects of interfering matter. Johnson also fails to disclose or suggest a narrow cylindrical or conical gap between the housing and the rotor. Additionally, the primary requirement for the Johnson housing is that it be able to define liquid and gaseous zones and provide a sterile environment for the growing cells. Thus, the Johnson housing can not be immersed in the culture medium nor can it have any openings to permit liquid outside the housing to flow via such openings into the gap for separation even if the device were immersed in the culture medium. Johnson fails to disclose or suggest immersing his housing in that fluid for any reason.

An object of the present invention is to provide an improved method and apparatus for in-situ filtration preferably through use of semi-permeable membranes.

In one aspect the invention provides an apparatus for in situ filtration of liquid samples comprising:—

an inner rotor body rotatable about an axis and having an outer side wall extending in the direction of the axis of rotation of the rotor body and spaced from the axis,

a stationary outer body having an inner side wall extending in the direction of the axis of the rotation of the rotor body, at least partially surrounding and spaced from the outer side wall of the rotor body to define a gap for receiving a fluid sample, the gap between the inner and outer bodies having essentially annular cross sections in planes extending essentially perpendicular to the axis of rotation of the inner body, the gap having upper and lower portions as viewed in the direction of the axis of rotation,

at least a portion of the surface of the outer side wall of the inner body or the inner side wall of the outer body facing the gap defining a filter for passage of permeate from the liquid sample.

means for leading the permeate away from the filter, characterised in that the outer body has an opening such that when the apparatus is at least partially immersed in liquid to be sampled the liquid flows through the opening into the gap for filtration.

In another aspect the invention provides a method of filtration of liquid samples comprising introducing a liquid sample into a gap between a stationary outer body and a rotatable inner body, at least a portion of the surface of at least one of the inner and outer bodies facing the gap comprising a filter for the passage of permeate from liquid in the gap, causing permeate to flow through the filter from the gap and collecting permeate from the surface of the filter which faces away from the gap,

characterised in that liquid for filtration flows into the gap when at least a lower portion of the outer body is immersed in a body of the liquid, and characterized by rotating the inner body at a rate such that the calculated Taylor number $(T_a)$ of at least a substantial portion of the liquid in the gap is greater than 40.

This allows *in situ* membrane filtration to be successfully used to produce fluid suitable for sampling and/or testing free from the effects of interfering matter. In its preferred form the invention in use overcomes the clogging problem without use of such expedients as ultrasound or water hammers, by making use of a hydrodynamic phenomena known as Taylor vortices in the parent fluid in the gap between the bodies. These annular, toroidal vortices effectively maintain the membrane at a flux level near ideal and produce other surprising results, the most important of which is effective filtration with very low energy consumption. By selecting the speed of rotation and the width of the gap, the makeup of the permeate for the selected membrane type can be determined.

The apparatus is preferably portable and various means may be provided for collecting the permeate solutions, and for rotating the inner cylinder. Additionally, parent fluid may be circulated within the device, and transmembrane flow may be enhanced by various pressure differential means, as well as use of an applied electric field. Preferably the membrane is on the outer surface of the inner body but a membrane on the inner surface of the stationary outer cylinder is also possible, either alone or in conjunction with the membrane on the inner cylinder.

The surface of the cylinder supporting a membrane may be provided with a series of grooves in communication with at least one aperture providing access to the interior of the cylinder. Lands between the grooves and in registration with the periphery of the membrane support the membrane. Adhesive can be provided to secure the periphery of the membrane to the lands of the surface of the cylinder.

For a fuller understanding of the invention, reference is had to the following description of filtration apparatus, given by way of example only, with reference to the accompanying drawings, in which:

Figure 1 is a simplified schematic perspective view, in partial section, of a pair of cylinders with a fluid therebetween, illustrating phenomena utilized in use of the apparatus;

Figure 2 is an enlarged view of a portion of Figure 1, showing fluid flow in accordance with the above phenomena;

Figures 3A and B are plots of tangential and angular velocities between A—B in Figure 2.

Figures 4A and B are plots of radial and angular velocities between C—D in Figure 3;

Figure 5 is similar to Figure 2, and shows the additional effect of permeate being removed through the membrane;

Figure 6 is a side elevational view in cross-section of filtration apparatus used for examples which illustrate the advantages of the invention.

Figure 7 is a side elevational view in cross-section of an embodiment of the invention for *in situ* separation;

Figure 8 is a cross-sectional view taken along line VIII—VIII of Figure 7;

# EP 0 165 992 B1

Figure 9 is a side elevational view in cross-section of the apparatus of Figure 7 having a propeller means for enhancing recirculation;

Figure 10 is a cross-sectional view taken along line X—X of Figure 9.

Understanding of the invention will be facilitated if the Taylor vortex phenomenon is clearly understood. As discussed by Schlichting in *Boundary-Layer Theory* 7th Ed., McGraw-Hill, 1979, instabilities in fluid flow between concentric cylinders where only the inner cylinder is in motion were first investigated by Lord Rayleigh, who performed calculations based on the assumption that the fluid was non-viscous. Taylor, using a framework of linear theory and considering viscous fluids, found that when a certain Taylor's number was exceeded, axially circumferential vortices appear, which rotate in alternately opposite directions.

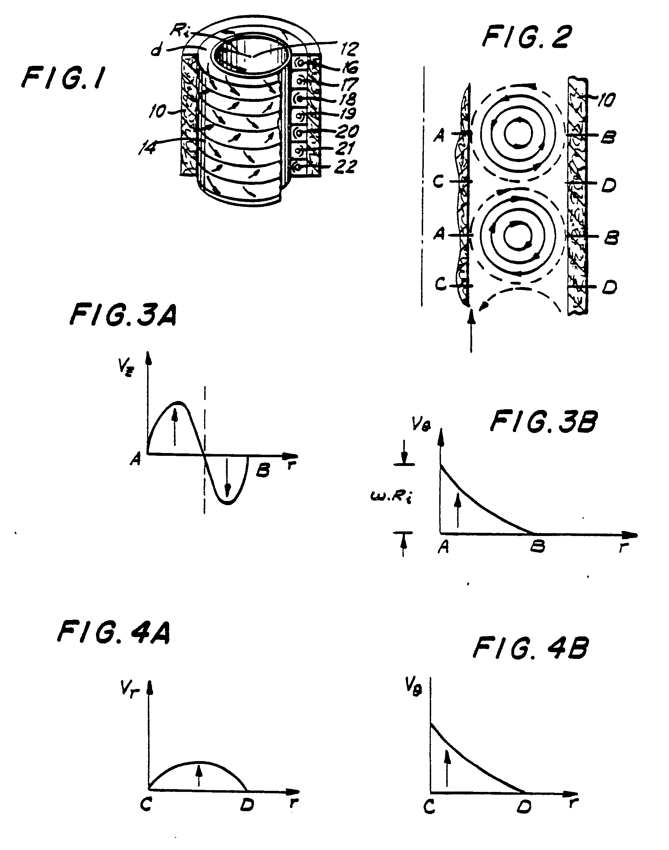

Attention is directed to Figure 1, which illustrates the phenomenon in simplified form. Specifically, an outer, stationary cylinder 10 is separated from an inner, rotating cylinder 12 of radius $R_1$ by a gap d. The gap is filled with a fluid 14. Under the proper conditions, set forth below, vortices rotating clockwise (16, 18, 20, 22) and counter-clockwise (17, 19, 21) are set up. The present invention defines the conditions whereby these vortices are maintained while continuously withdrawing fluid permeate through the inner cylinder.

Taylor determined that the minimum condition for the establishment of such vortices, defined as the Taylor number $(T_a)$ was

$$T_a = \frac{\mu_i d}{v} \sqrt{\frac{d}{R_i}} \geq 41.3 \qquad \text{(Eq. 1)}$$

where v is the kinematic viscosity of the fluid, and $\mu_i$ is the peripheral velocity of cylinder 12.

Taylor and others determined that the vortices would persist in some cases at $T_a = 400$ and in other cases up to $T_a = 1700$, but that turbulence would ensue if the Reynolds number $(R_a)$ rose above about 1000. $R_a = w (2d)/v$ where w is axial velocity. More particularly, those skilled in hydrodynamics will appreciate that a time average velocity profile of fluid flow will generate a smooth curve, but an instantaneous velocity profile is very ragged. Thus, the Taylor vortices shown in Figure 1 may be characterized as "main flow", but there will be a turbulent component of this, and as $T_a$ rises, this instantaneous turbulent velocity will ultimately become more important.

Understanding the invention as applied to filtration is facilitated by a more detailed consideration of an individual vortex between an inner wall 12 and an outer wall 10, and attention is directed to Figure 2, where the points A, B denote positions on the respective inner and outer walls opposite the center of a vortex, and points C, D denote positions between a pair of vortices. Using cylindrical coordinates, $v_z$=tangential velocity, $v_r$=radial velocity, and $v_0$=angular velocity, it can be seen that $v_z$ describes a sine wave between points A and B, there being zero tangential velocity at the center of the torus, as Figure 3A illustrates. For a counter-rotating torus, the curve is reversed. The radial velocity from C to D describes an arc, as shown in Figure 4A.

The important fact here is that the shear stresses due to tangential velocity, $v_z$, at one point A are in one direction and at the next point A are in the opposite direction. In a filtration device, the inner wall 12 is a semipermeable membrane and, because there is a net axial velocity due to the feeding and removal of permeate and concentrate, the individual vortices assume what appears to be a helical shape and move from the inlet to the outlet. Thus, the surface of the membrane is continuously "scoured" by the solution itself, and particulates, gels and colloids which would otherwise collect thereon are maintained in the solution.

The effect of suction through the membrane on the vortices is actually not large, even though it is the cause of concentration polarization. This is because the velocity of the suction, defined as volumetric flux per unit area of membrane per unit of time, is small compared to the linear velocity created by the rotating cylinder.

When the conditions for establishing the Taylor vortices are met, the filtration can proceed at quite nominal pressures and the high pressures normally associated with these procedures are avoided, which is important in large-scale separations. However, in many separations high pressures will be preferred.

Comparing the torque required for ideal laminar flow between inner rotating and outer stationary concentric cylinders (see *Bird et al. Transport Phenomena*, John Wiley & Sons 1960), and the torque required for vortices (see Taylor, "Fluid Friction Between Rotating Cylinders", Proc. Roy. Soc. London, 1932), the latter generally is about 2—3 times greater, because of energy transfer from the primary (axial) to the secondary (vortex) flow. However, in general, the energy required as used in conventional apparatus, is still at least an order of magnitude greater than the energy required for rotation. Again, there are instances with the present invention where ideal conditions involve high rotational energy.

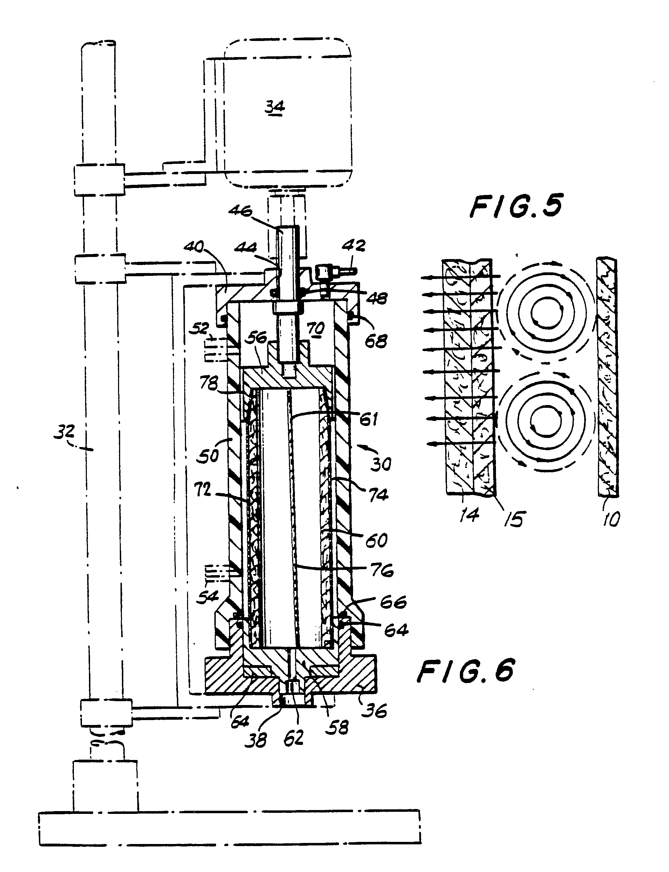

Referring to Figure 6, apparatus 30 is supported on a suitable rack 32 to which is also attached a drive motor 34. The stationary portions of the apparatus 30 comprise an outlet (lower) housing 36 with an outlet 38 centered in the bottom thereof, an inlet (upper) housing 40 including a gas line fitting 42, a central opening 44, to accommodate a drive shaft 46, and a suitable gasket (seal) 48. Housings 36 and 40 hold between them an outer (stationary) cylinder 50, which may be made of clear, strong plastic.

Several interchangeable cylinders 50 may be provided, all having the same outside diameter, but each

4

having a different inside diameter, whereby gap d may also be varied. Also, some cylinders 50 may be provided with an inlet 52 and an outlet 54, as shown in phantom in Figure 6, so that filtrations involving recirculation of the feed can be carried out. The rotating portion of apparatus 30, in addition to drive shaft 46, comprises an upper housing 56 and a lower housing 58, supporting therebetween a porous (rotating) inner cylinder 60. A feature of cylinder 60 is that it includes a vertical slot 61 for accommodating the ends of a membrane 74 wrapped therearound, and that it be somewhat compliant, e.g. slot 61 can be opened a bit for insertion of the membrane ends 76, but will be normally sealed tightly. Also, housing 56 and 58 are sized to make a tight, friction seal against the membrane and prevent any leakage. Upper housing 56 has drive shaft 46 axially fitted into its top for rotation therewith. Lower housing 58 includes an axial opening 62, which serves as a permeate outlet, and a bushing 64 formed of a material such as Teflon selected for minimum resistance. A second gasket (seal) 64 is provided between (rotating) lower housing 58 and (stationary) housing 36, and O-rings 66 and 68 are provided between cylinder 50 and outlet housing 38 and inlet housing 40, respectively, to prevent fluid leakage.

It is important to note that the outside diameter of upper housing 56 is less than the inside diameter of outer cylinder 50, providing a fluid communication path 78 between chamber 70 at the top of the apparatus and space 72 between cylinders 50 and 60 for gas fed from gas line 42.

Adaptability of the apparatus to efficient separation of small samples is clear. Even when the sample does not fill the space between the inner and outer cylinders, a large membrane area relative to the available fluid is presented, and gas pressure may be supplied to pressurize the sample and aid filtration. Separation is fast, and there is virtually no volume limit to permeate recovery.

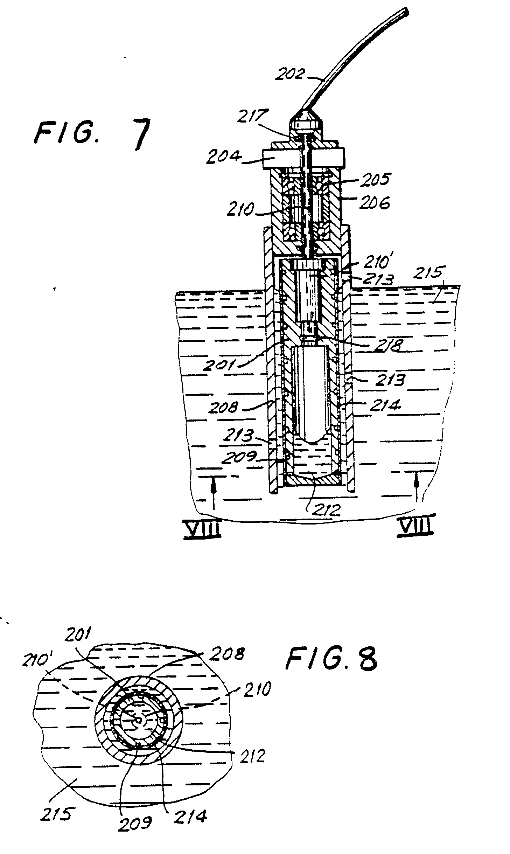

Reference is now made to Figures 7 to 10, which illustrate embodiments of the invention for providing *in situ* separations and analyses.

In use, conventional *in situ* devices often encounter difficulties in obtaining continuous analytical data about parent fluids. Often, these parent fluids are crude process streams containing suspended solids, particular matter and other substances, which interfere with physical and chemical fluid measurements and measuring devices.

The usual practice to circumvent such interference is to remove offending substances by suitable separation techniques in order to obtain a "testable" fluid. Conventional techniques for separation such as centrifugation and chromatography are time consuming and discontinuous. Often, the parent fluid must also be treated with clarifying agents, precipitants, emulsifiers, solubilizers, antifoaming agents and the like which can interfere with fluid measurements or contaminate the parent fluid.

In principle, the ideal separation system would be capable of acting in a continuous fashion, thus generating a continuous supply of testable samples. Membrane filtration would seem to be the most versatile separatory technique were it not that membranes tend to become fouled or clogged by a wide variety of substances. Moreover, continuous operation is not practical since intermittent cleaning is required. Such fouling, not only interferes with sample production by decreasing transmembrane flow, but more importantly tends to alter the quality of the permeate, thus undoing the primary objective of the process. Thus, commonly practiced membrane separation techniques cannot be used continuously to produce acceptable and useable testable fluid.

In contrast, membrane filtration is achieved *in situ* in the apparatus in accordance with the invention disclosed in Figures 7 to 10 by obtaining continuously a permeate in order to provide suitable fluid for analysis, or if desired, by simply obtaining a sample of permeate in a discontinuous short time separation. No separate concentrate stream is collected. In effect, the only fluid loss to the parent fluid is that of the permeate transmembrane flow. The unique fluid dynamics of the separator system minimize typical interfering phenomena associated with membrane filters such as fouling and concentration polarization. The apparatus in accordance with the invention also allows for *in situ* sampling and analysis by simply immersing the apparatus for a short time in the parent fluid, e.g., water sampling and analysis in contaminated sites.

The apparatus may take advantage of the fluid dynamic referred to as Taylor vortices in which toroidal-like counter rotational vortices are created in the space between an outer stationary cylinder and an inner rotating cylinder.

Transmembrane flow is created by one or a combination of driving forces across the membrane interface including pressure differential, electric field, and inherent concentration gradient.

Another important feature of the device is the flexibility of separation. The composition of the permeate can be controlled not only by the nature of the membrane and the magnitude of the driving force, but also by the specific conditions of the separation such as the size of the gap between the cylinder, the diameter of the inner cylinder and the rotational speed of the inner cylinder. These parameters determine not only the Taylor vortices, but also determine the shear stress on the surface of the membrane.

Besides membrane separation in which a volume of permeate is involved, the principle of spinning an inner cylinder in the stationary outer cylinder, whereby said inner and outer cylinders are submerged in the parent fluid, can be used for different applications, including ion detection (e.g., chloride probe, pH probe) oxygen detection, etc. in the form of spinning an inner cylinder within a stationary outer cylinder, whereby signals of electrical nature are obtained free from the interfering particle matter.

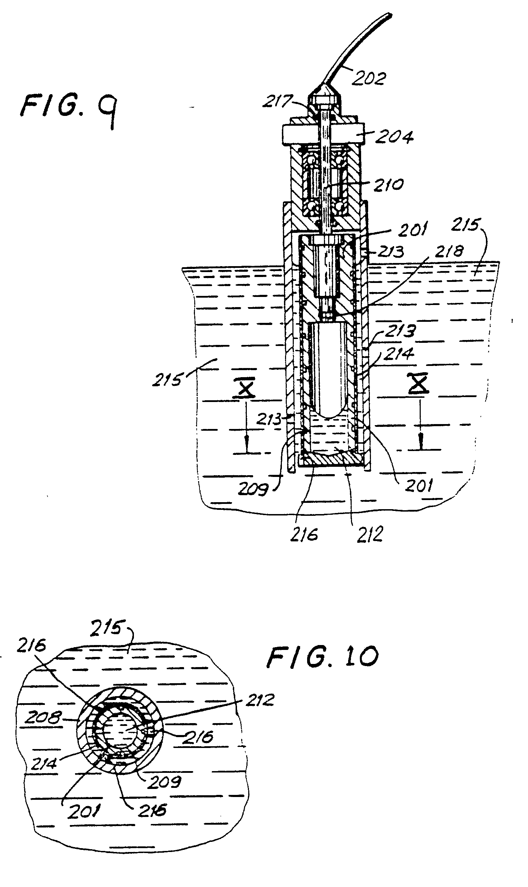

Referring to Figures 7 and 8, the apparatus in accordance with the invention consists of an inner rotatable cylinder 201 with a semipermeable membrane wrapped along its longitudinal surface, connected to a driving shaft 210. Drive shaft 210 is provided with a passageway 210' coupled to a vacuum source by a tube 202 which extends from the upper region of the driving shaft. Driving shaft 210 is contained within a housing 206 by means of bearings 205. A rotating means 204 is positioned in housing 206 and is connected to driving shaft 210 for rotation thereof. A vacuum condition is maintained in shaft 210 by means of gasket 217.

If both vacuum and pressure outlets of a suitable vacuum pump are used, the same vacuum pump may supply the vacuum driving force across the membrane interface while rotating inner cylinder 201 by means of a suitable air-driven motor 204 supported on housing 206. Inner cylinder 201 may also be rotated by means of a suitable flexible drive or other means, direct or indirect, electrical or magnetic.

An outer stationary cylinder 208 is positioned concentric with and spaced away from inner rotating cylinder 201. It is also acceptable for inner cylinder 201 to be eccentric with outer cylinder 208. It is possible, by way of example, for said inner and/or said outer cylinders to also be formed in a conical shape. A filter membrane 214 is mounted in inner cylinder 201. A membrane may also be attached to the inner surface of the stationary outer cylinder.

Outer stationary cylinder 208 can have walls of solid construction, but iws walls may also be perforated or slotted by at least one hole and/or slot 213 in order to establish better recirculation and mixing between parent fluid 215 and the fluid in the gap between the inner and outer cylinders.

If the parent fluid is pressurized as in many chemical, biochemical and fermentation reactors, transmembrane permeate flow is created by using the pressure difference between the pressurized parent fluid and the permeate collected.

Transmembrane permeate flow is collected within inter-connected narrow channels 209 on the surface of inner cylinder 201. The permeate passes through at least one hole perforating cylinder 201 into a suitable collector chamber 212, from which it may be drawn continuously or intermittently.

Besides pressure differential for transmembrane fluid flow, other driving forces may be employed. One is creating an electromotive force by placing electrodes in the inner and outer cylinders, respectively. Also, a driving force may be created by using concentration gradients between the permeate and parent fluid solutes.

The apparatus can be used for separations where the volume of parent fluid is limited. The device is simply submerged in a container of the parent fluid 215. Separation of the parent fluid into a permeate and a parent fluid concentrate is consequently obtained. The advantage of this mode of operation is that no external means of recirculation of fluid is required. Also, parent fluid 215 may remain in the original container.

If the parent fluid container is in a certain form, particularly in the shape of an Erhlenmeyer flask or test tube, the device may be constructed without an outer cylinder. The walls of the parent fluid container may be used instead of the outer cylinder wall, so long as sufficient space is provided between the rotating inner cylinder and the wall of the parent fluid container. Alternatively, a kit of interchangeable outer and/or inner cylinders of different diameters may be constructed whereby the gap d may be varied.

For certain uses, depending upon the type of membrane, it may not be necessary to reach a Taylor number of 40. If, by way of example, the parent fluid is very dilute and non-viscous and the membrane is only slightly permeable, it may not be necessary to establish Taylor vortices.

Additionally, when the distance between the inner and outer cylinders becomes very small, the Taylor number may be 40 or less even if the inner cylinder is rotating at high speed. Nonetheless, effective separation can be obtained. This is partially explained by the high shear rate on the surface of the membrane. This is especially true if the shear stress is combined with the effect of parent fluid slipping on the surface of the membrane, which itself is dependent upon the nature of the parent fluid, the membrane, and the magnitude of the shear stress.

Referring now to Figures 9 and 10, like referred numerals being assigned to like elements to those depicted in Figures 7 and 8, in order to enhance recirculation of parent fluid in the bulk and in the gap between the inner and outer cylinders, a recirculation propeller 216 can be used. Propeller 216 is attached to the bottom of the rotating cylinder 201. The rotation of propeller 216 creates recirculation of parent fluid in the bulk and in the gap between the cylinders. Propeller 216 may also serve as a stabilizer for the bottom of the rotating inner cylinder, preventing excessive wobbling of the inner cylinder in the gap between the inner and outer cylinders. It is particularly important where the inner cylinder 201 is flexibly attached to drive shaft 210 by a static "O" ring 218, isolating permeate 212 within inner cylinder 201 from the parent fluid.

The device of Figures 7 to 10 can be submerged into parent fluid fully, partially, vertically, horizontally, upside down, or at any suitable angle so long as it is sealed sufficiently. The apparatus is particularly adaptable for *in situ* separations in systems where immediate extraction of permeates is necessary.

The method and apparatus described in Figures 7 to 10 can be used not only for obtaining permeate fluid but also for releasing required solute and/or solvent into the parent fluid by releasing fluid which contains the solute and/or solvent into tube 202 and therefore into the inner rotating cylinder.

Such solute or solvent is released into the parent fluid through a membrane placed on the outside of the inner cylinder, thereby taking advantage of the system's driving force, is centrifugal effect, its density differential, or its concentration difference. The advantage of this method is that the membrane in contact with parent fluid can be kept unfouled for any time period, insuring uninterrupted and controlled release of

EP 0 165 992 B1

the solute and/or solvent into the parent fluid. As taught above, the membrane may also be attached to the inner surface of the stationary outer cylinder.

Utility of the invention is illustrated by the following specific examples, taken with the apparatus of Figure 6 but applicable to illustrate the method applied to the apparatus of Figures 7 to 10.

### Example 1

A filtration cell having a working membrane area of 390 cm$^2$ (0.42 ft$^2$) was employed, and $R_i = 3$ cm and $d = 0.5$ cm. A test solution (3000 ml) was 0.02% bentonite in tapwater ($v = 0.015$ poise). With pure tap water and 10 psi (68.95 KPa) pressure the transmembrane flow was 220 ml/min (0.14 gpm/ft$^2$) or 136 µsa (gpm/ft$^2 \times 929$) (1 µsa $= 10^{-4}$ ml/cm$^2$ sec atmosphere). By rotating the membrane (inner) cylinder at 100 rpm, a $T_a = 428$ was established and the vortices appear. Pressure was again 10 psi (68.95 KPa). Results are set forth in Table I. Table I and the tables following describe various characteristics of the permeate.

### TABLE I

| Time (min) | ml/min | (litres per min./ cm$^2 \times 929/3.8$) gpm/ft$^2$ | µsa | Temp. °C. | Remarks |
|---|---|---|---|---|---|
| 0 | 100 | 0.06 | 62 | 24 | Permeate was clear |
| 5 | 100 | 0.06 | 62 | 25 | |
| 10 | 100 | 0.06 | 62 | | |
| 15 | 96 | 0.06 | 59 | 27 | |
| 20 | 104 | 0.065 | 64 | 20 | |
| 25 | 94 | 0.06 | 59 | | |

### Example 2

A similar solution was filtered under different conditions, where $d = 0.4$ cm, $R_i = 1.3$ cm, and rotational speed was 350 rpm, giving a $T_a = 705$. Results are shown in Table II.

### TABLE II

| Time (min) | (litres per min./ cm$^2 \times 929/3.8$) gpm/ft$^2$ at 138 KPa | µsa | Concentration of the feed% | Remarks |
|---|---|---|---|---|
| 0 | 0.026 | 26.8 | 0.2 | Clear: Room Temp. |
| 5 | 0.020 | 21 | 0.21 | |
| 15 | 0.015 | 15.7 | 0.24 | |
| 30 | 0.012 | 12.5 | 0.28 | |
| 40 | 0.011 | 11.6 | 0.32 | |
| 50 | 0.0108 | 11.2 | 0.35 | |
| 60 | 0.0108 | 11.2 | 0.39 | |
| 70 | 0.01 | 10.3 | 0.44 | |
| 90 | 0.009 | 9.4 | 0.55 | |

### Example 3

A third test was carried out under conditions similar to those used in Example 2, except that the rotational speed was increased to 800 rpm, giving a $T_a = 1616$. Results are shown in Table III.

7

# EP 0 165 992 B1

## TABLE III

| Time: (min) | (litres per min./ cm²×929/3.8) gpm/ft² at 138 KPa | µsa | Concentration: of the feed% | Remarks |
|---|---|---|---|---|
| 0 | 0.03 | 31.3 | 0.2 | Clear: Room Temp |
| 5 | 0.024 | 24.6 | 0.2 | |
| 15 | 0.02 | 20.6 | 0.25 | |
| 30 | 0.019 | 19.2 | 0.32 | |
| 40 | 0.017 | 17.9 | 0.39 | |
| 50 | 0.017 | 17.4 | 0.49 | |
| 60 | 0.0156 | 16.1 | 0.65 | |
| 70 | 0.013 | 13.4 | 0.85 | |
| 80 | 0.014 | 14.4 | 1.25 | 84% Water Recovery |

### Example 4

A second test solution was prepared using a milligram of BSA (96—99% bovine albumin) per milliliter of a buffer solution. The buffer was as follows:

Buffer

    0.0167 molar $NaH_2PO_4$
    0.033  molar $Na_2HPO_4$
    0.15   molar NaCl
    0.0003 molar $NaN_3$

In this solution, $v=0.01$ poise. Ths same apparatus as in Examples 2 and 3 was used ($d=0.4$ cm, $R_1=1.3$ cm) and the test was run at 350 rpm, giving a $T_a=1057$. Results are shown in Table IV.

## TABLE IV

| Time: (min) | (litres per min./ cms²×929/3.8) gpm/ft² at 68.9 KPa | µsa | BSA conc. in permeate mg/ml | Remarks |
|---|---|---|---|---|
| 5 | 0.012 | 12 | 0.114 | Concentration of buffer in permeate was the same as original buffer. |
| 10 | 0.012 | 12 | 0.126 | |
| 15 | 0.013 | 13 | 0.101 | |
| 30 | 0.013 | 13 | 0.089 | |
| 45 | 0.012 | 12 | 0.091 | |
| 60 | 0.013 | 13 | 0.091 | |
| 75 | 0.0123 | 12.3 | 0.105 | |
| 90 | 0.0123 | 12.3 | 0.126 | |
| 100 | 0.0123 | 12.3 | 0.124 | |
| Concentrate: | | | 2.723 | |
| Overall rejection: | | | 88.6% | |

8

Example 5

In this test, the results of which are reported in Table V, a different membrane was used, but the buffered albumin solution was the same, as was the apparatus. However, the test was run at 1000 rpm for two minutes ($T_a$=3030) and then dropped to 350 rpm. High-speed results reported in Table V are underlined.

TABLE V

| Time: (min) | (litres per min./ cms$^2$×929/3.8) gpm/ft$^2$ at 68.9 KPa | μsa | BSA Conc. in permeate mg/ml) | Remarks |
|---|---|---|---|---|
| 0 | 0.036 | 36 | 0.085 | Concentration of buffer in permeate |
| 2 | | | 0.073 | was the same as original buffer. |
| 5 | 0.030 | 30 | 0.169 | |
| 10 | 0.033 | 33 | 0.057 | |
| 15 | 0.029 | 29 | 0.143 | |
| 20 | 0.028 | 28 | 0.143 | |
| 30 | 0.028 | 28 | 0.163 | |
| 45 | 0.033 | 33 | 0.185 | |

The important aspect of these results, compared to ordinary filtrations, is that the transmembrane flow rate remained substantially constant throughout the test, indicating no clogging or blinding of the filter. Another aspect to note is that permeate compositions can be altered constantly by using different rpm's.

In conventional membrane separation processes, as exemplified by Millipore and Amicon equipment, the membrane is located at the bottom of a vessel, the fluid is poured in, and a magnetic stirring bar provides agitation. Such a stirring bar must be kept at a distance, however small, from the membrane surface and yet have at least some of its structure submerged to obtain any reasonable mixing and for effective separation to occur. In a situation where the sample volume is small and high permeate recovery is required, the only answer is to use a very narrow vessel with a correspondingly small-area membrane at the bottom. This makes for a very slow separation.

The feed solution, with its own viscosity, is a "given". With the apparatus of the invention, gap d and velocity are variable. Generally, a variety of semipermeable membranes will be available but this is not always the case.

The next step is to optimise the Taylor number. With some fluids the Taylor vortices are readily observable but, if not, adding some aluminium powder is a handy expedient. This is a matter of trial. If the membrane becomes coated with a gel at $T_a$=50 but stays clear at $T_a$=250, the latter is selected.

Of course, varying gap d has a second-order effect on $T_a$, as equation 1 makes clear. It should be kept in mind that as d gets smaller (and $T_a$ decreases) the vortices will be more intense, and energy consumption will also rise.

The goals of establishing the general procedure are clear: the desired permeate, no fouling of the membrane, a good flux through the membrane, and, within these constraints, minimal energy consumption, which means the slowest rotation that is compatible with the desired permeate and flux-criteria.

Two further aspects of the invention are worthy of note. One is that, because of the significant force involved during operation, a unit can be operated vertically, horizontally or even tilted at an angle. Secondly, because of the wide range of allowable values of $T_a$, the two cylinders need not be concentric. For example, one or the other or both could be a section of a cone, or the axis of the inner cylinder could be offset from that of the outer cylinder. Even though it is known that the Taylor vortices will survive such manipulation, the effect thereof on specific separations must be determined.

The apparatus described and illustrated can have two individual membrane components: one attached to the outer surface of an inner cylinder and one attached to the inner surface of an outer cylinder. The two membranes (i.e. the inner and outer membranes) may be constructed from the same material in order to increase, for example, the total effective membrane material area and thereby the total transmembrane flow. Alternatively, the two membranes may be of different composition and/or structure in order to permit separation of different feed substances, wherein each membrane acts somewhat differently toward substances dissolved or suspended within the feed stream.

For example, the difference between the two membranes may be such that one is hydrophobic and the other hydrophilic; or one may be positively charged (e.g., fixed or adherent chemical, cationic charged

9

groups) while the other may be negatively charged (e.g. fixed or adherent chemical, anionic charged groups); or one membrane may contain certain fixed or adherent structures of a bioaffinity type differing from those of the other membrane. Also, compound separation principles may be employed including the utilization of pore size exclusion.

Additionally, one can take advantage of the inherent centrifugation effect of the apparatus. Where the feed stream contains substances of differing densities, lighter, less dense materials would tend to be concentrated and then filtered preferentially by the inner membrane (i.e. the membrane at the outer surface of the inner cylinder), while more dense materials would tend to be concentrated and filtered by the outer membrane (i.e., the membrane attached to the inner surface of the outer cylinder) during operation.

In the specific use of emulsion separations (e.g. oil droplets—micelles in water), one can take advantage of the difference in density between oil and water, the hydrophobic nature of the oil, and the ionic nature of the micelle surface.

It is understood that the devices described in the accompanying drawings are applicable to any filtration method in which a spinning surface is employed. These include ultrafiltration, microfiltration, reverse osmosis, pervaporation, dialysis, electrodialysis and water splitting. They are also applicable to systems employing plural rotating cylinders and plural stationary cylinders.

Additionally, it is understood that the rotatable inner cylinder may be constructed of a porous material such as glass, ceramic, sintered metal or an organic substance which may effectively operate to filter.

## Claims

1. An apparatus for in situ filtration of liquid samples comprising:—
an inner rotor body (201) rotatable about an axis and having an outer side wall extending in the direction of the axis of rotation of the rotor body and spaced from the axis,
a stationary outer body (208) having an inner side wall extending in the direction of the axis of the rotation of the rotor body, at least partially surrounding and spaced from the outer side wall of the rotor body to define a gap for receiving a fluid sample, the gap bewteen the inner and outer bodies having essentially annular cross sections in planes extending essentially perpendicular to the axis of rotation of the inner body, the gap having upper and lower portions as viewed in the direction of the axis of rotation,
at least a portion of the surface of the outer side wall of the inner body or of the inner side wall of the outer body facing the gap defining a filter (214) for passage of permeate from the liquid sample,
means for leading the permeate away from the filter,
characterised in that the outer body has an opening such that when the apparatus is at least partially immersed in liquid to be sampled the liquid flows through the opening into the gap for filtration.

2. Apparatus according to Claim 1 characterised in that the opening is essentially circumferentially extending at the lower end of the gap.

3. Apparatus according to Claim 1 or Claim 2, in combination with a liquid sample (215) characterised in that at least the lower portion of the apparatus is immersed in the sample.

4. Apparatus according to Claim 3 characterised in that the gap is a sufficiently narrow gap and the means for rotating the rotor body are such that the body can be rotated at a rate such that the calculated Taylor number $(T_a)$ for liquid in the gap is greater than 40.

5. Apparatus according to any of Claim 1 to 4 including means for withdrawing permeate from the device.

6. Apparatus according to any of Claims 1 to 5 in which the filter is a membrane.

7. Apparatus according to any of Claims 1 to 6 characterised in that the outer side wall of the rotor body and the inner side wall of the outer body are cylindrical or conical and have a common longitudinal axis.

8. Apparatus according to any of Claims 1 to 7 characterised by a propeller means (216) connected to the rotor body.

9. Apparatus according to any of Claims 1 to 8 characterised by means for assisting the flow of permeate across the filter by causing a pressure differential, an electric field, a concentration gradient or a combination thereof.

10. Apparatus according to any of Claims 1 to 9 characterised by including means for physically or chemically testing liquid filtered by the device.

11. Apparatus according to Claim 10 together with Claim 3 or any Claim dependent thereon characterised in that the liquid sample contains suspended solids, particulate matter or other substances that might interfere with testing and the means for physically or chemically testing the liquid is arranged to produce a test signal, which test signal is substantially free from the effect of the suspended solids, particulate matter or other substances that in the absence of the apparatus might interfere with the testing.

12. Apparatus according to any of Claims 1 to 11 which is portable.

13. Apparatus according to any of Claims 10 to 12 in which the testing means is ion detection means to detect the presence of an ion.

14. Apparatus according to Claim 13 in which the ion detection means is a chloride or hydrogen ion detection means.

15. Apparatus according to any of Claims 10 to 12 in which the testing means is oxygen detection means to detect the presence of oxygen.

16. Apparatus according to any of Claims 1 to 15 characterised in that the filter comprises a semi-permeable sheet membrane, a support member for supporting a surface of the membrane in facing relation to the gap, means for collecting permeate from the surface of the membrane which faces away from the gap and means coupled to the collecting means for drawing permeate through the membrane and out of the apparatus.

17. A method of filtration of liquid samples comprising introducing a liquid sample into a gap between a stationary outer body and a rotatable inner body, at least a portion of the surface of at least one of the inner and outer bodies facing the gap comprising a filter for the passage of permeate from liquid in the gap, causing permeate to flow through the filter from the gap and collecting permeate from the surface of the filter which faces away from the gap,

characterised in that liquid for filtration flows into the gap when at least a lower portion of the outer body is immersed in a body of the liquid and characterised by rotating the inner body at a rate such that the calculated Taylor number ($T_a$) of at least a substantial portion of the liquid in the gap is greater than 40.

18. A method according to Claim 17 characterised by varying the rotational speed of the rotor to control the composition of the permeate.

## Patentansprüche

1. Vorrichtung zum "in-situ"-Filtrieren von Flüssigkeitsproben (215) mit

einem um eine Achse drehbaren inneren Rotorkörper (201) mit einer sich in Richtung der Drehachse des Rotorkörpers und mit Abstand zu dieser erstreckenden äußeren Seitenwand,

einem ortsfesten Außenkörper (208) mit einer sich in Richtung der Drehachse des Rotorkörpers erstreckenden, zumindest teilweise die äußere Seitenwand des Rotorkörpers (201) mit Abstand umgebenden und einen Zwischenraum zur Aufnahme der Flüssigkeitsprobe bildenden inneren Seitenwand, wobei der Zwischenraum zwischen dem inneren und dem äußeren Körper in im wesentlichen senkrecht zur Drehachse des inneren Körpers liegenden Schnittebenen im wesentlichen kreisringförmige Querschnitte und in Richtung der Drehachse gesehen obere und untere Bereiche aufweist, wobei mindestens ein dem Zwischenraum zugekehrter Bereich der Oberfläche der äußeren Seitenwand des inneren Körpers oder der inneren Seitenwand des äußeren Körpers einen Filter (214) zum Durchtritt eines Filtrats aus der Flüssigkeitsprobe begrenzt,

einer Einrichtung zum Ableiten des Filtrats vom Filter

dadurch gekennzeichnet, daß der Außenkörper eine derart ausgebildete Öffnung aufweist, daß dann, wenn die Vorrichtung zumindest teilweise in die zu untersuchende Flüssigkeit eingetaucht ist, die Flüssigkeit zum Filtrieren durch die Öffnung in den Zwischenraum strömt.

2. Vorrichtung nach Anspruch 1, dadurch gekennzeichnet, daß sich die Öffnung im wesentlich in Umfangsrichtung am unteren Ende des Zwischenraums erstreckt.

3. Vorrichtung nach Anspruch 1 oder 2, in Kombination mit einer Flüssigkeitsprobe, dadurch gekennzeichnet, daß zumindest der untere Bereich der Vorrichtung in die Flüssigkeitsprobe eingetaucht ist.

4. Vorrichtung nach Anspruch 3, dadurch gekennzeichnet, daß der Zwischenraum ein hinreichend enger Spalt ist und der Drehantrieb für den Rotor (201) derart ausgeführt ist, daß der Körper mit einer Drehzahl antriebbar ist, bei der die berechnete Taylorzahl (Ta) der im Spalt befindlichen Flüssigkeit größer als 40 ist.

5. Vorrichtung nach einem der Ansprüche 1 bis 4, mit Mitteln zum Abziehen des Filtrats aus der Vorrichtung.

6. Vorrichtung nach einem der Ansprüche 1 bis 5, bei der der Filter eine Membran ist.

7. Vorrichtung nach einem der Ansprüche 1 bis 6, dadurch gekennzeichnet, daß die äußere Seitenwand des Rotorkörpers (201) und die innere Seitenwand des äußeren Körpers zylindrisch oder konisch sind und eine gemeinsame Längsachse aufweisen.

8. Vorrichtung nach einem der Ansprüche 1 bis 7, dadurch gekennzeichnet, daß mit dem Rotorkörper eine Propellereinrichtung (216) verbunden ist.

9. Vorrichtung nach einem der Ansprüche 1 bis 8, gekennzeichnet, durch Mittel zur Unterstützung der Strömung des Filtrats durch den Filter durch Erzeugen eines Druckunterschiedes, eines elektrischen Feldes, eines Konzentrationsgradienten oder einer Kombination derselben.

10. Vorrichtung nach einem der Ansprüche 1 bis 9, gekennzeichnet, durch Mittel zum physikalischen oder chemischen Prüfen der durch die Vorrichtung gefilterten Flüssigkeit.

11. Vorrichtung nach Anspruch 10 in Verbindung mit Anspruch 3 oder einem der davon abhängigen Ansprüche, dadurch gekennzeichnet, daß die Flüssigkeitsprobe suspendierte Feststoffe, Partikelmaterial oder andere Substanzen aufweist, die die Untersuchung stören könnten, und daß die Mittel zur physikalischen oder chemischen Prüfung der Flüssigkeit zur Erzeugung eines Prüfsignals eingerichtet sind, das im wesentlichen durch die suspendierten Feststoffe, das Partikelmaterial oder die anderen Substanzen unbeeinflußt ist, die ohne die Vorrichtung die Prüfung stören könnten.

12. Vorrichtung nach einem der Ansprüche 1 bis 11, dadurch gekennzeichnet, daß die Vorrichtung tragbar ausgeführt ist.

13. Vorrichtung nach einem der Ansprüche 10 bis 12, bei der die Mittel zum Prüfen Mittel zur Detektion von Ionen sind.

14. Vorrichtung nach Anspruch 13, bei der die Mittel zur Detektion von Ionen Chloridionen oder Wasserstoffionen detektieren.

15. Vorrichtung nach einem der Ansprüche 10 bis 12, bei der die Mittel zum Prüfen Mittel zur Detektion von Sauerstoff sind.

16. Vorrichtung nach einem der Ansprüche 1 bis 15, dadurch gekennzeichnet, daß der Filter eine semipermeable Membran, ein Halteteil zum Halten einer Oberfläche der Membran in einer dem Spalt zugewandten Lage, Mittel zum Sammeln von Filtrat von der dem Spalt abgewandten Seite der Membran und mit den Mitteln zum Sammeln des Filtrats verbunden Mittel zum Hindurchziehen des Filtrats durch die Membran und aus der Vorrichtung heraus aufweist.

17. Verfahren zum Filtrieren von Flüssigkeitsproben mit folgenden Verfahrensschritten:

in einem zwischen einem ortsfesten Außenkörper und einem drehbaren Innenkörper ausgebildeten Zwischenraum wird eine Flüssigkeitsprobe geleitet,

zumindest ein Bereich der dem Zwischenraum zugewandten Oberfläche wenigstens eines der dem Zwischenraum zugewandten inneren und äußeren Körper weist einen Filter für den Durchtritt eines Filtrats aus der im Zwischenraum befindlichen Flüssigkeit auf, wodurch das Filtrat aus dem Zwischenraum durch den Filter strömt und auf der dem Zwischenraum abgewandten Oberfläche des Filters gesammelt wird, dadurch gekennzeichnet,

daß zur Filtrierung die Flüssigkeit in den Zwischenraum strömt, wenn zumindest ein unterer Bereich des äußeren Körpers in die Flüssigkeit eingetaucht ist und daß der innere Körper mit einer solchen Drehzahl angetrieben ist, daß die berechnete Taylorzahl (Ta) zumindest eines wesentlichen Teils der im Zwischenraum befindlichen Flüssigkeit größer als 40 ist.

18. Verfahren nach Anspruch 17, dadurch gekennzeichnet, daß zur Steuerung der Zusammensetzung des Filtrats die Drehgeschwindigkeit des Rotors änderbar ist.

## Revendications

1. Appareil pour le filtrage in situ d'échantillons liquides, comprenant:

un corps de rotor intérieur (201) qui peut tourner autour d'un axe et qui présente une paroi latérale extérieure s'étendant dans la direction de l'axe de rotation du du corps de rotor et espacée de cet axe,

un corps extérieur fixe (208) comportant une paroi latérale intérieure qui s'étend dans la direction de l'axe de rotation du corps de rotor et qui entoure au moins partiellement la paroi latérale extérieure du corps de rotor, à distance de celle-ci, pour définir un intervalle destiné à recevoir un échantillon de liquide, l'intervalle entre les corps intérieur et extérieur présentant, pour l'essentiel, des sections transversales annulaires dans des plans s'étendant, pour l'essentiel, perpendiculairement à l'axe de rotation du corps intérieur, l'intervalle présentant des parties supérieure et inférieure lorsqu'on le voit dans la direction de l'axe de rotation,

au moins une partie de la surface de la paroi latérale extérieure du corps intérieur, ou de la paroi latérale intérieure du corps extérieur, étant tournée vers l'intervalle en définissant un filtre (214) pour le passage du filtrat depuis l'échantillon de liquide,

des moyens pour enlever le filtrat du filtre,

caractérisé par le fait le corps extérieur présente une ouverture telle que, lorsque l'appareil est immergé, du moins partiellement, dans du liquide à échantillonner, le liquid s'écoule à travers l'ouverture dans l'intervalle destiné au filtrage.

2. Appareil selon la revendication 1, caractérisé par le fait que l'ouverture s'étend de manière pour l'essentiel circulaire à l'extrémité inférieure de l'intervalle.

3. Appareil selon la revendication 1 ou la revendication 2, en combinaison avec un échantillon de liquide (215), caractérisé par le fait qu'au moins la partie inférieure de l'appareil est immergée dans l'échantillon.

4. Appareil selon la revendication 3, caractérisé par le fait que l'intervalle est un intervalle suffisamment étroit et que les moyens pour faire tourner le corps de rotor sont tels le corps puisse tourner à une vitesse telle que le nombre de Taylor calculé $(T_a)$ pour le liquide dans l'intervalle soit supérieure à 40.

5. Appareil selon l'une quelconque des revendications 1 à 4, comprenant des moyens pour retirer le filtrat du dispositif.

6. Appareil selon l'une quelconque des revendications 1 à 5, dans lequel le filtre est une membrane.

7. Appareil selon l'une quelconque des revendications 1 à 6, caractérisé par le fait que la paroi latérale extérieure du corps de rotor et la paroi latérale intérieure du corps extérieur sont cylindriques ou coniques et présentent un axe longitudinal commun.

8. Appareil selon l'une quelconque des revendications 1 à 7, caractérisé par des moyens à hélice (216) reliés au corps de rotor.

9. Appareil selon l'une quelconque des revendications 1 à 8, caractérisé par des moyens pour aider l'écoulement du filtrat à travers le filtre en produisant une différence de pression, un champ électrique, un gradient de concentration, ou une combinaison de ceux-ci.

10. Appareil selon l'une quelconque des revendications 1 à 9, caractérisé par le fait qu'il comprend des moyens pour soumettre à des essais physiques ou chimiques le liquide filtré par le dispositif.

11. Appareil selon la revendication 10 prise avec la revendication 3 ou une revendication quelconque en dépendant, caractérisé par le fait que l'échantillon liquide contient des solides en suspension, des matières en particules ou d'autres substances qui pourraient interférer avec l'essai, et que les moyens pour soumettre le liquide à des essais physiques ou chimiques sont aptes à produire un signal d'essai, ce signal d'essai étant sensiblement libre de l'effet des solides en suspension, des matières en particules ou des autres substances qui pourraient interférer avec l'essai en l'absence de l'appareil.

12. Appareil selon l'une quelconque des revendications 1 à 11 qui est portable.

13. Appareil selon l'une quelconque des revendications 10 à 12, dans lequel les moyens d'essai sont des moyens de détection ionique permettant de détecter la présence d'un ion.

14. Appareil selon la revendication 13, caractérisé par le fait que les moyens de détection ionique sont des moyens de détection des ions chlorure ou hydrogène.

15. Appareil selon l'une quelconque des revendications 10 à 12, dans lequel les moyens d'essai sont des moyens de détection de l'oxygène permettant de détecter la présence d'oxygène.

16. Appareil selon l'une quelconque des revendications 1 à 15, caractérisé par le fait que le filtre comprend une membrane en feuille semi-perméable, un organe de support pour porter une surface de la membrane tourné vers l-intervalle, des moyens pour recueillir le filtrat depuis la surface de la membrane qui est tournée à l'opposé de l'intervalle, et des moyens, accouplés aux moyens pour recueillir le filtrat, pour faire passer le filtrat à travers la membrane et hors de l'appareil.

17. Procédé de filtrage d'échantillons liquides, dans lequel on introduit un échantillon de liquide dans un intervalle ménagé entre un corps extérieur fixe et un corps intérieur tournant, au moins une partie de la surface d'au moins l'un des corps intérieur et extérieur tournée vers l'intervalle comprenant un filtre pour le passage du filtrat du liquide dans l'intervalle, on amène le filtrat à s'écouler à travers le filtre depuis l'intervalle, et on recueille le filtrat depuis la surface du filtre qui est tournée à l'opposé de l'intervalle, caractérisé par le fait que le liquide à filtrer s'écoule dans l'intervalle lorsqu'au moins une partie inférieure du corps extérieur est plongée dans un volume du liquide, et caractérisé par le fait que l'on fait tourner le corps intérieur à une vitesse telle que le nombre de Taylor calculé ($T_a$) d'au moins une partie subsantielle du liquide dans l'intervalle soit supérieur à 40.

18. Procédé selon la revendication 17, caractérisé par le fait que l'on fait varier la vitesse de rotation du rotor pour agir sur la composition du filtrat.

13

FIG.1

FIG.2

FIG.3A

FIG.3B

FIG.4A

FIG.4B

1

FIG.5

FIG.6

FIG. 7

FIG. 8

FIG. 9

FIG. 10

4